# EUROPÄISCHE PATENTSCHRIFT

(11) **EP 2 539 782 B1**
(45) Veröffentlichungstag und Bekanntmachung des Hinweises auf die Patenterteilung: **18.03.2015**
(21) Anmeldenummer: 10788047.8
(22) Anmeldetag: 29.11.2010
(51) Int. Cl.: G05B 19/18, G05B 23/02, H04L 12/40

(54) **VERFAHREN ZUR ERFASSUNG VON IN EINER ELEKTRONISCH GESTEUERTEN PRODUKTIONSMASCHINE AUFTRETENDEN EREIGNISSEN**
METHOD FOR SENSING EVENTS WHICH OCCUR IN AN ELECTRONICALLY CONTROLLED PRODUCTION MACHINE
PROCÉDÉ POUR SAISIR DES ÉVÉNEMENTS SURVENANT DANS UNE MACHINE DE PRODUCTION À COMMANDE ÉLECTRONIQUE

(30) Priorität: 22.02.2010 DE 102010002183
(43) Veröffentlichungstag der Anmeldung: 02.01.2013
(73) Patentinhaber: Koenig & Bauer Aktiengesellschaft, 97080 Würzburg (DE)
(72) Erfinder: MÜLLER, Michael, Helmar, 97834 Birkenfeld (DE)
(86) Internationale Anmeldenummer: PCT/EP2010/068381
(87) Internationale Veröffentlichungsnummer: WO 2011/101053

(56) Entgegenhaltungen:
- DE-A1- 10 113 260
- DE-A1-102004 050 386
- DE-A1-102005 027 064

## Beschreibung

Die Erfindung betrifft ein Verfahren zur Erfassung von in einer elektronisch gesteuerten Produktionsmaschine auftretenden Ereignissen gemäß dem Oberbegriff des Anspruchs 1.

Durch die DE 101 13 260 A1 ist ein Verfahren zur Erfassung von in einer elektronisch gesteuerten Produktionsmaschine auftretenden Ereignissen bekannt, wobei die Ereignisse jeweils in einer Maschineneinheit der mehrere Maschineneinheiten aufweisenden Produktionsmaschine auftreten, wobei das jeweilige Ereignis durch eine Registrierung von es anzeigenden Daten erfasst wird, wobei die Daten jedes zu erfassenden Ereignisses jeweils zusammen mit einer Angabe zum Zeitpunkt des Eintritts des betreffenden Ereignisses registriert werden, wobei die Angabe zum Zeitpunkt des Eintritts des jeweiligen Ereignisses jeweils auf ein Zeitsignal bezogen wird, wobei das zur Angabe des Zeitpunktes des Eintritts des jeweiligen Ereignisses in Bezug genommene Zeitsignal in einem ersten in der Produktionsmaschine angeordneten Kommunikationsnetzwerk geführt wird, wobei zumindest ein Zeitverhalten von mindestens einem zu der Produktionsmaschine gehörenden Antrieb in Abhängigkeit von dem in dem ersten Kommunikationsnetzwerk geführten Zeitsignal gesteuert wird.

Durch die DE 102 43 454 A1 ist eine Druckmaschine mit mindestens einer Maschineneinheit und mit mehreren Antrieben und mit mehreren jeweils zumindest ein Zeitverhalten von einem dieser Antriebe steuernden oder regelnden Steuereinrichtungen bekannt, wobei mehrere dieser Antriebe mechanisch voneinander unabhängig angetrieben und Signale einer Leitachsposition einer virtuellen Leitachse in mindestens einer diese Antriebe verbindenden Signalleitung geführt sind.

Durch die DE 196 17 620 A1 ist eine Diagnoseeinrichtung für wenigstens eine elektronisch gesteuerte Maschine, insbesondere eine CNC-Werkzeugmaschine, bekannt, wobei diese Diagnoseeinrichtung eine Rechnereinheit, eine Speichereinheit, eine Eingabeeinheit und eine Ausgabeeinheit aufweist, wobei die Eingabeeinheit mit Aufnehmern verbunden ist, wobei die Aufnehmer analoge und/oder digitale Betriebszustände der Maschine erfassen, in diesen entsprechende Signale umsetzen und der Rechnereinheit zuführen, wobei die Rechnereinheit ihr zugefügte Signale mit vorgegebenen Schlüsseln verknüpft und die Verknüpfungsergebnisse der Speichereinheit und/oder der Ausgabeeinheit zuführt, und wobei die Betriebszustände in Zeitabständen erfassbar sind, durch die sichergestellt ist, dass für den Betrieb der Maschine relevante Ereignisse und/oder Störungen in entsprechende Signale umgesetzt und der Rechnereinheit zugeführt werden, wobei für den Betrieb der Maschine fehlerrelevante Ereignisse und/oder Störungen vorzugsweise zeitgleich erfasst werden und mit einer Zeitmarke versehen werden.

Der Erfindung liegt die Aufgabe zugrunde, ein Verfahren zur Erfassung von in einer elektronisch gesteuerten Produktionsmaschine auftretenden Ereignissen zu schaffen, wobei in dieser Produktionsmaschine auftretende Ereignisse, insbesondere als eine Störung gewertete Ereignisse, auch dann in einer chronologisch und/oder kausal richtigen Reihenfolge registriert werden, wenn Daten von in verschiedenen Maschineneinheiten dieser Produktionsmaschine auftretenden Ereignissen an eine zentrale von diesen Maschineneinheiten räumlich getrennte Speicherstelle oder Datenverarbeitungseinheit übertragen werden.

Die Aufgabe wird erfindungsgemäß durch die Merkmale des Anspruches 1 gelöst.

Die mit der Erfindung erzielbaren Vorteile bestehen insbesondere darin, dass in der Produktionsmaschine in verschiedenen Maschineneinheiten dieser Produktionsmaschine insbesondere in einer raschen zeitlichen Folge, d. h. nahezu zeitgleich auftretende, jeweils z. B. als eine Störung gewertete Ereignisse in einer zu dieser Produktionsmaschine gehörenden, von der betreffenden Maschineneinheit i. d. R. räumlich getrennt angeordneten Speicherstelle unabhängig von einer zu der Speicherstelle führenden Übertragungsstrecke und einhergehender Signallaufzeiten in einer chronologisch richtigen Reihenfolge registriert werden. Die chronologisch richtige Registrierung ergibt sich daraus, dass erfasste Ereignisse nicht erst mit ihrer Speicherung in der den jeweiligen Maschineneinheiten dieser Produktionsmaschine übergeordneten Speicherstelle, sondern bereits in der die jeweilige Störung meldenden Maschineneinheit jeweils mit einer als Zeitstempel bezeichneten Zeitinformation versehen wird, wobei alle in dieses Störungsmeldesystem eingebundene Maschineneinheiten der Produktionsmaschine ihren jeweiligen Zeitstempel mit Bezug auf ein selbes Zeitsignal, d. h. eine selbe Uhr, generieren. In der bevorzugten Ausführung wird als das für alle diese Maschineneinheiten geltende Zeitsignal ein Signal verwendet, welches diesen Maschineneinheiten durch einen in der Produktionsmaschine angeordneten Antriebsbus entweder unmittelbar oder aus diesem Signal ableitbar zur Verfügung gestellt wird.

Ein Ausführungsbeispiel der Erfindung ist in den Zeichnungen dargestellt und wird im Folgenden näher beschrieben.

Es zeigen:
- Fig. 1: Steuerungskonzept einer als Druckmaschine ausgebildeten Produktionsmaschine;
- Fig. 2: Erfassung und Weiterverarbeitung von in einer Maschineneinheit der in der Fig. 1 dargestellten Druckmaschine erfolgten Ereignissen.

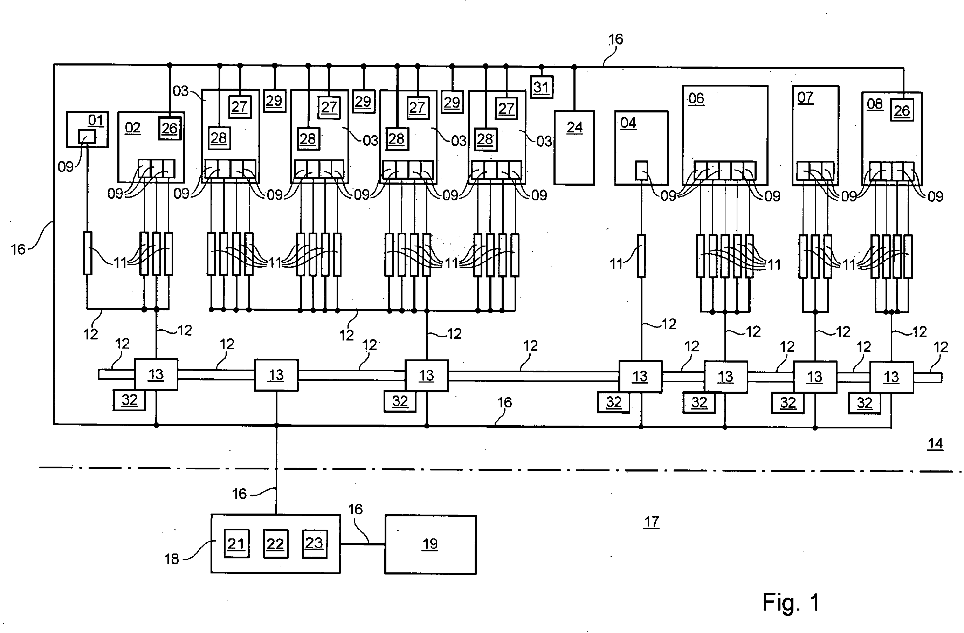

Eine in der Fig. 1 hinsichtlich ihres Steuerungskonzeptes beispielhaft dargestellte Produktionsmaschine, insbesondere eine Druckmaschine, z. B. eine Rotationsdruckmaschine, vorzugsweise eine eine Materialbahn, insbesondere Papierbahn z. B. in einem Mehrfarbendruck bedruckende Rollenoffset- Rotationsdruckmaschine, weist mehrere in Transportrichtung der Materialbahn aneinandergereiht angeordnete, zum Teil auch im Wesentlichen baugleiche Maschineneinheiten auf, wobei diese Maschineneinheiten jeweils mindestens einen Prozessschritt und/oder Verarbeitungsschritt in einem von der Druckmaschine auszuführenden Druckprozess ausführen, wobei zumindest eine der zu dieser Druckmaschine gehörenden Maschineneinheiten entweder als ein Einzugswerk 01 oder als ein Rollenwechsler 02 oder als eine Druckeinheit 03 oder als ein Kühlwalzenständer 04 oder als eine in einem Oberbau der Druckmaschine angeordnete Anordnung 06 mit mehreren positionsvariablen Walzen oder als eine quer zur Transportrichtung der Materialbahn variabel positionierbare Falztrichtereinheit 07 oder als ein Falzapparat 08 ausgebildet ist. In dem in der Fig. 1 dargestellten Beispiel verläuft die Transportrichtung der in der Druckmaschine zu bedruckenden Materialbahn von links nach rechts im Wesentlichen horizontal durch diese Druckmaschine.

Mehrere der zu dieser Druckmaschine gehörenden Maschineneinheiten weisen jeweils mindestens einen Antrieb 09, z. B. einen vorzugsweise elektrischen Motor, zur Ausführung einer Bewegung, z. B. einer Rotationsbewegung, oder einer Positionsveränderung jeweils mindestens einer in der betreffenden Maschineneinheit angeordneten Einrichtung, z. B. eines Zylinders, insbesondere eines Formzylinders oder eines Übertragungszylinders, oder einer Walze oder eines Farbwerks oder eines Feuchtwerks oder eines anderen bewegbaren, positionsvariablen Aggregates, auf. Der jeweilige Antrieb 09 ist zumindest einer vorzugsweise elektronischen Steuereinrichtung 11 zugeordnet, wobei die betreffende Steuereinrichtung 11 auch als eine Regeleinrichtung ausgebildet sein kann. Die betreffende Steuereinrichtung 11 steuert oder regelt den jeweiligen Antrieb 09 zumindest in dessen jeweiligem Zeitverhalten. In der bevorzugten Ausführung steuert oder regelt jede Steuereinrichtung 11 jeweils genau einen Antrieb 09 in seinem jeweiligen Bewegungsverhalten. Die einen der Antriebe 09 steuernde Steuereinrichtung 11 wird auch als dessen Antriebsregler bezeichnet. Die jeweils paarweise Zuordnung von einem Antrieb 09 zu einer bestimmten Steuereinrichtung 11 ist in der Fig. 1 durch eine dünne Verbindungslinie angedeutet, wobei entlang der jeweiligen gezeigten Verbindungslinie jeweils Steuersignale transportiert werden.

Damit gehören zur Druckmaschine entsprechend der Anzahl der zu den jeweiligen Maschineneinheiten dieser Druckmaschine gehörenden Antriebe 09 eine Vielzahl von diese Antriebe 09 steuernden oder regelnden Steuereinrichtungen 11. Diese in einer jeweiligen Zuordnung zu einem der Antriebe 09 stehenden Steuereinrichtungen 11 sind in einem ersten in der Druckmaschine angeordneten Kommunikationsnetzwerk 12 miteinander verbunden, wobei dieses erste Kommunikationsnetzwerk 12 einen so genannten Antriebsbus bildet, auf welchem insbesondere digitale Daten zum Zeitverhalten der jeweiligen Antriebe 09, d. h. insbesondere zum Verlauf einer von dem jeweiligen Antrieb 09 ausgeübten Bewegung, zwischen mindestens einer den jeweiligen jeweils einem Antrieb 09 zugeordneten Steuereinrichtungen 11 übergeordneten Steuereinrichtung 13 und den betreffenden einzelnen jeweils einem Antrieb 09 zugeordneten Steuereinrichtungen 11 kommuniziert werden. Dieses erste Kommunikationsnetzwerk 12 ist vorzugsweise leitungsgebunden ausgebildet und z. B. ein Netzwerk nach dem Industriestandard Sercos III.

Zu der Druckmaschine gehören i. d. R. mehrere übergeordnete Steuereinrichtungen 13, wobei jeweils eine dieser übergeordneten Steuereinrichtungen 13 z. B. genau oder mindestens einer der zu der Druckmaschine gehörenden Maschineneinheiten zugeordnet ist, wobei dieses vorzugsweise als ein Ringnetzwerk ausgebildete erste Kommunikationsnetzwerk 12 dann zudem diese mehreren übergeordneten Steuereinrichtungen 13 miteinander verbindet. Ein Datenfluss auf dem mehrere übergeordnete Steuereinrichtungen 13 miteinander verbindenden Teil des ersten Kommunikationsnetzwerkes 12 bildet eine elektronische Signale kommunizierende, vorzugsweise virtuelle Leitachse für zumindest einige, vorzugsweise alle mit diesem ersten Kommunikationsnetzwerk 12 in Verbindung stehenden Antriebe 09. Die Signale der Leitachse betreffen zumindest eine Leitachsposition. In dem ersten Kommunikationsnetzwerk 12 ist aber auch ein absolutes oder relatives Zeitsignal entweder direkt abgreifbar oder z. B. aus der Leitachsposition zumindest ableitbar vorhanden, auf welches Zeitsignal zumindest das jeweilige Zeitverhalten eines jeden mit dem ersten Kommunikationsnetzwerk 12 in Verbindung stehenden Antriebs 09 bezogen ist. Damit weisen vorzugsweise alle Maschineneinheiten derselben Druckmaschine eine selbe Zeitbasis auf, welche durch das auf dem Antriebsbus transportierte Zeitsignal gegeben ist. Das absolute Zeitsignal ist z. B. eine Angabe zum aktuellen Datum und/oder der aktuellen Uhrzeit. Das relative Zeitsignal definiert z. B. einen zeitlichen Abstand des Ereigniseintritts zu einem zumindest für die betreffende Druckmaschine zuvor festgelegten zeitlichen Bezugspunkt. Die übergeordneten Steuereinrichtungen 13 sind jeweils vorzugsweise als eine speicherprogrammierbare Steuereinrichtung, kurz SPS genannt, ausgebildet. Das erste Kommunikationsnetzwerk 12 und die mit ihm verbundenen die jeweiligen Antriebe 09 steuernden Steuereinrichtungen 11 und die übergeordneten Steuereinrichtungen 13 bilden in der betreffenden Druckmaschine deren Maschinenebene 14.

Die vorzugsweise mehreren übergeordneten Steuereinrichtungen 13 der Druckmaschine sind zusätzlich zu ihrer Anbindung an das erste Kommunikationsnetzwerk 12 mittels eines vorzugsweise vom ersten Kommunikationsnetzwerk 12 verschiedenen zweiten Kommunikationsnetzwerkes 16 mit einem einer Leitebene 17 dieser Druckmaschine zugeordneten Rechner, dem so genannten Leitrechner 18, verbunden, wobei der Leitrechner 18 mehrere verschiedene Rechnereinheiten aufweisen und als ein in einem zu der Druckmaschine gehörenden Leitstand 19 integrierter Bestandteil oder zumindest in datentechnischer Verbindung mit diesem Leitstand 19 ausgebildet sein kann. Wenn der Leitrechner 18 und der zu der Druckmaschine gehörende Leitstand 19 als jeweils eigenständige Komponenten ausgebildet sind, können auch diese beiden Komponenten der Druckmaschine mittels des zweiten Kommunikationsnetzwerkes 16 miteinander kommunizieren. Die zu dem Leitrechner 18 gehörenden Rechnereinheiten sind funktional z. B. ein Prozessleitrechner 21 und/oder ein Prozessmelderechner 22 und/oder ein Prozessservicerechner 23. Eine der mehreren übergeordneten Steuereinrichtungen 13 der Druckmaschine kann allein der Einspeisung der Signale der Leitachse vom zweiten Kommunikationsnetzwerk 16 in das erste Kommunikationsnetzwerk 12 dienen. Das erste Kommunikationsnetzwerk 12 und das zweite Kommunikationsnetzwerk 16 haben vorzugsweise keine unmittelbare direkte signaltechnische Verbindung miteinander, sondern sind durch die jeweilige übergeordnete Steuereinrichtung 13 voneinander entkoppelt. In der Fig. 1 sind die Maschinenebene 14 und die Leitebene 17 der betreffenden Druckmaschine durch eine strichpunktierte Linie getrennt dargestellt, wobei die Maschinenebene 14 und die Leitebene 17 auch räumlich getrennt voneinander ausgebildet sein können. Der Leitrechner 18, der in dem zweiten Kommunikationsnetzwerk 16 eine Daten speichernde Speicherstelle bildet, ist somit i. d. R. von den betreffenden Maschineneinheiten der Druckmaschine räumlich getrennt angeordnet.

Das zweite Kommunikationsnetzwerk 16 dient gleichfalls dem insbesondere bidirektionalen Transport digitaler Daten und ist z. B. als ein leitungsgebundenes öder drahtloses, vorzugsweise Ethernet-bäsiertes Netzwerk ausgebildet. Die Leitebene 17 ist der Maschinenebene 14 dieser Druckmaschine steuerungstechnisch hierarchisch übergeordnet. Eine in einer der zu der Druckmaschine gehörenden Maschineneinheiten angeordnete, der Kommunikation zwischen Mensch und Maschine dienende Kommunikationseinrichtung 26, z. B. eine Anzeigeeinrichtung und/oder eine Eingabeeinrichtung, kann vorzugsweise direkt und unmittelbar mittels des zweiten Kommunikationsnetzwerkes 16 mit dem Leitrechner 18 verbunden sein. Ebenso können auch diverse andere, in einer der Maschineneinheiten angeordnete Aggregate, z. B. eine Farbversorgungseinrichtung 27 oder eine Gummituchwascheinrichtung 28 oder eine Farbdichteregeleinrichtung 29 oder ein auf den Bedruckstoff gerichtetes, z. B. optoelektronisches, vorzugsweise kamerabasiertes Inspektionssystem 31, direkt und unmittelbar mit dem zur Leitebene 17 führenden zweiten Kommunikationsnetzwerk 16 verbunden sein. Auch mindestens eine Steuereinrichtung und/oder mindestens ein Sensor eines in Transportrichtung der Materialbahn hinter der mindestens einen oder hinter der letzten Druckeinheit 03 angeordneten Trockners 24 kann vorzugsweise direkt und unmittelbar an das zweite Kommunikationsnetzwerk 16 angeschlossen sein.

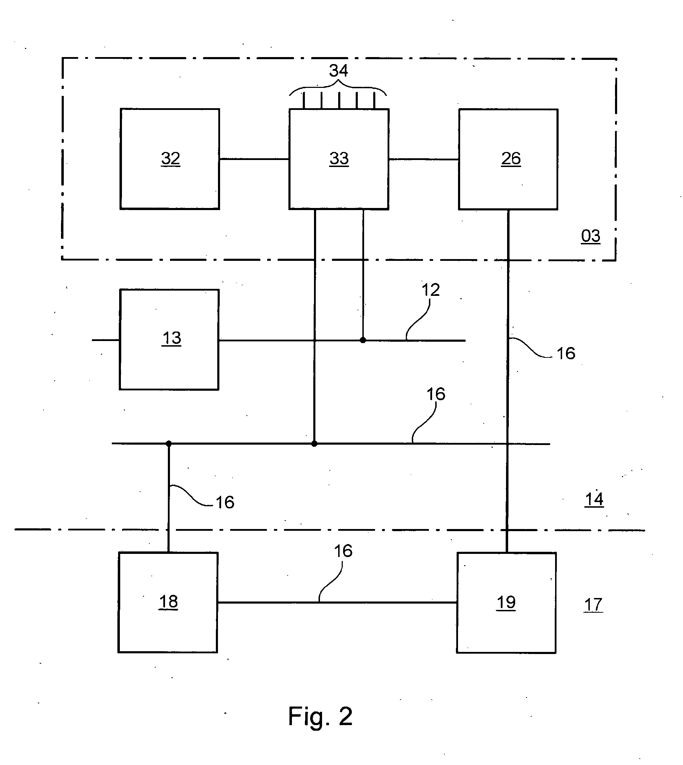

Ein von der Druckmaschine mithilfe ihrer Maschineneinheiten ausgeführter Druckprozess wird überwacht, wobei vorzugsweise mehrere, insbesondere alle an diesem Druckprozess beteiligten Maschineneinheiten den jeweiligen mindestens einen von ihnen ausgeführten Prozessschritt und/oder Verarbeitungsschritt mittels eines Prüfprogramms jeweils auf Störungsfreiheit prüfen, wobei z. B. in jeder dieser einer bestimmten Maschineneinheit zugeordneten übergeordneten Steuereinrichtungen 13 ein für die betreffende Maschineneinheit geltendes, ihren jeweiligen Prozessschritt und/oder Verarbeitungsschritt überwachendes Prüfprogramm abläuft. Eine alternative Ausführung sieht vor, dass in zumindest einer der Maschineneinheiten der Druckmaschine, z. B. in einer Druckeinheit 03, eine von der zu der betreffenden Maschineneinheit gehörenden übergeordneten Steuereinrichtung 13 getrennte weitere Steuereinrichtung 33 (Fig. 2) vorgesehen ist, welche das für die betreffende Maschineneinheit geltende Prüfprogramm abarbeitet. In Verbindung mit dem Ablauf des jeweiligen Prüfprogramms wird von diesem ein während des in der Druckmaschine ablaufenden Druckprozesses, d. h. insbesondere ein in Verbindung mit der Durchführung des Prozessschrittes und/oder Verarbeitungsschrittes in der betreffenden Maschineneinheit auftretendes Ereignis, welches von einem erwarteten Normalfall in unzulässiger Weise abweicht und z. B. sensorisch erfassbar ist, registriert und als eine Störung gewertet, wobei als Normalfall gilt, was hinsichtlich des jeweiligen Prozessschrittes und/oder Verarbeitungsschrittes bezüglich zuvor festgelegter Betriebsparameter den Erwartungen entspricht und ergebnismäßig innerhalb zu den jeweiligen Betriebsparametern definierten Toleranzgrenzen liegt. Als eine Störung wird jede in der jeweiligen Maschineneinheit erfasste Information gewertet, deren Auswertung dazu führen kann, dass ein laufender Produktionsprozess angehalten oder unterbrochen werden muss.

Im Fall einer z. B. sensorisch erkannten Störung wird ihr Auftreten und vorzugsweise zusätzlich mindestens eine weitere Information über das sie verursachende Ereignis in einer Speichereinrichtung 32, die z. B. zu der betreffenden, einer bestimmten Maschineneinheit zugeordneten übergeordneten Steuereinrichtung 13 oder zu der in der betreffenden Maschineneinheit angeordneten weiteren Steuereinrichtung 33 gehört, zumindest zwischengespeichert, bevor vorzugsweise in der Leitebene 17 eine weitere Auswertung dieser erkannten Störung erfolgt. Vorzugsweise wird auf diese Weise jede in einer der Maschineneinheiten auftretende Störung erfasst und registriert, zumindest solche Störungen, die während eines laufenden Druckprozesses auftreten. Eine Störung kann dazu führen, dass der von der betreffenden Maschineneinheit ausgeführte Prozessschritt und/oder Verarbeitungsschritt angehalten oder ausgesetzt werden muss. Je nach einem Schweregrad der Störung muss die von der Störung akut betroffene Maschineneinheit und/oder es müssen alle an dem aktuellen Druckprozess beteiligten Maschineneinheiten der Druckmaschine sogar stillgesetzt werden, gegebenenfalls auch durch einen Notstopp. Ein derartiger entweder eine oder mehrere Maschineneinheiten betreffender Eingriff in den von der Druckmaschine ausgeführten Druckprozess wird jeweils vorzugsweise vom zugehörigen Leitrechner 18 aus gesteuert.

Das jeweilige mit Bezug auf eine der Maschineneinheiten ablaufende, einen Prozessschritt und/oder Verarbeitungsschritt der betreffenden Maschineneinheit überwachende Prüfprogramm erfasst ein Ereignis, indem es in einem vorzugsweise festen Zyklus von z. B. 10 ms bis 50 ms von zumindest einem in der betreffenden Maschineneinheit angeordneten Aggregat und/oder einem Sensor und/oder einer anderen zu überwachenden Einrichtung einen Datenzustand abfragt oder eine Information von dem betreffenden Aggregat oder dem Sensor oder der Einrichtung empfängt. Zur Identifizierung des Erzeugers und/oder Absenders der vom Prüfprogramm erfassten Information und/oder zur Interpretation dieser Information wird diese Information vorzugsweise vom Prüfprogramm mit einer Kennung oder Codierung, z. B. mit einem Nummerncode, versehen. Das Prüfprogramm kann die erfasste Information z. B. in Abhängigkeit von der ihr zugewiesenen Codierung auch sofort klassifizieren, indem es die jeweilige Information z. B. als einen Fehler, eine Warnung oder als eine allein Informationszwecken dienende Meldung einstuft. Vor allem wird aber eine vom Prüfprogramm erfasste Information, insbesondere ein als eine Störung gewertetes Ereignis, von diesem Prüfprogramm mit einem Zeitstempel versehen, wobei anhand des Zeitstempels im Rahmen der Genauigkeit des gewählten Erfassungszyklus feststellbar ist, zu welchem Zeitpunkt das erfasste Ereignis aufgetreten ist. Anhand des vorzugsweise jedem Ereignis aufgeprägten Zeitstempels ist eine eindeutige chronologische und/oder kausale Ordnung der z. B. von mehreren Maschineneinheiten erfassten Ereignisse möglich, und zwar auch dann, wenn mehrere der zu derselben Druckmaschine gehörenden Maschineneinheiten in einer raschen zeitlichen Folge, d. h. also nahezu zeitgleich, jeweils eine oder sogar mehrere Störungen an die übergeordnete Speicherstelle, insbesondere den Leitrechner 18 melden, wobei gerade der Leitrechner 18 auf diese gemeldeten Störungen durch die Wahl einer geeigneten Abhilfestrategie angemessen reagieren soll. Unterschiedlich lange Übertragungsstrecken zwischen der das Ereignis meldenden Maschineneinheit und dem Leitrechner 18 sowie zugehörige unterschiedliche Signallaufzeiten haben erfindungsgemäß keine negative Wirkung auf eine in dem Leitrechner 18 vorzunehmende chronologisch richtige Anordnung und entsprechende Auswertung der erfassten Ereignisse, weil die zeitliche Rangfolge erfasster Ereignisse jeweils anhand des jeweiligen Zeitstempels eindeutig ermittelbar und nicht von einer Eingangsregistrierung des jeweiligen Ereignisses im Leitrechner 18 abhängig ist.

Allgemein ist ein Zeitstempel ein z. B. numerischer oder alphanumerischer Wert in einem definierten Datenformat, der ein Ereignis anzeigenden Daten, beispielsweise beim Senden oder Empfangen einer Nachricht oder bei einer Modifikation von vorliegenden Daten, einen Zeitpunkt zuordnet. Der Zweck eines Zeitstempels ist es, für Menschen und/oder Computer fälschungssicher deutlich zu machen, wann eine Information vorgelegen hat oder ein Ereignis protokolliert wurde. Zeitstempel enthalten in der Regel eine Zeitinformation und eine Abweichung dieser Zeitangabe z. B. zur koordinierten Weltweit UTC oder zu einer anderen gültigen gesetzlichen Zeit. Zeitstempel können je nach in Bezug genommenem Zeitsystem als der Wert einer Echtzeituhr oder als der Wert einer logischen Uhr ausgebildet sein. Logische Uhren erlauben es, die Kausalordnung mehrerer Ereignisse zu bestimmen, ohne dass die an den voneinander verschiedenen (Ereignis-)Orten jeweils in Bezug genommenen, d. h. die jeweiligen lokalen (Echtzeit-)Uhren exakt synchronisiert sein müssen, wobei dennoch das Berechnen einer Zeitdifferenz zwischen zwei an unterschiedlichen Orten ausgeführten Zeitstempeln möglich ist. Die Zeitauflösung des Zeitstempels liegt z. B. im Bereich von weniger als einer Sekunde, insbesondere im Bereich von Millisekunden oder sogar Mikrosekunden. Erfindungsgemäß wird vorgeschlagen, zur Ausbildung des in der Produktionsmaschine bzw. Druckmaschine verwendeten Zeitstempels ein Zeitsignal ihres Antriebsbusses in Bezug zu nehmen, welches Zeitsignal seinerseits einem beliebigen Zeitsystem zugeordnet sein kann.

Am Beispiel einer Druckeinheit 03 werden in Verbindung mit der Fig. 2 nun weitere Einzelheiten hinsichtlich der Erfassung und Weiterverarbeitung von in dieser Druckeinheit 03 erfolgten Ereignissen erläutert. Die beispielhaft angedeutete Druckeinheit 03 weist eine Steuereinrichtung 33 auf, welche ein für diese Druckeinheit 03 geltendes Prüfprogramm abarbeitet. Diese Steuereinrichtung 33 steht mit einer insbesondere als eine Anzeigeeinrichtung ausgebildeten Kommunikationseinrichtung 26 sowie mit einer vorzugsweise als ein Halbleiterspeicher ausgebildeten Speichereinrichtung 32 jeweils in datentechnischer Verbindung, wobei die Kommunikationseinrichtung 26 dieser Druckeinheit 03 vornehmlich der Anzeige mit Bezug auf diese Druckeinheit 03 lokaler Ereignisse dient. Die Steuereinrichtung 33 der Druckeinheit 03 ist auch sowohl mit dem ersten Kommunikationsnetzwerk 12 als auch mit dem zweiten Kommunikationsnetzwerk 16 verbunden, wobei beide Kommunikationsnetzwerke 12; 16 vorzugsweise datentechnisch voneinander getrennt sind. Mit dem ersten Kommunikationsnetzwerk 12 ist auch eine vorzugsweise dieser Druckeinheit 03 zugeordnete übergeordnete Steuereinrichtung 13 verbunden. Das zweite Kommunikationsnetzwerk 16 verbindet die der Maschinenebene 14 zuzurechnende Steuereinrichtung 33 der Druckeinheit 03 mit dem in der Leitebene 17 angeordneten Leitrechner 18, wobei der Leitrechner 18 mittels des zweiten Kommunikationsnetzwerks 16 mit einem zu der Druckmaschine gehörenden Leitstand 19 in datentechnischer Verbindung steht. Es ist z. B. vorgesehen, dass der Leitstand 19 auch direkt ohne Einbeziehung des Leitrechners 18 über das zweite Kommunikationsnetzwerk 16 mit der in der Druckeinheit 03 vorgesehenen Kommunikationseinrichtung 26 kommunizieren und dort Informationen insbesondere zur Anzeige bringen kann. Das erste Kommunikationsnetzwerk 12 stellt der Steuereinrichtung 33 der Druckeinheit 03 ein absolutes oder ein relatives Zeitsignal zur Verfügung.

Die Steuereinrichtung 33 der Druckeinheit 03 greift an ihren Dateneingängen 34 in einem vom Prüfprogramm vorgegebenen Zyklus von z. B. 20 ms von zumindest einem in der Druckeinheit 03 angeordneten Aggregat und/oder einem Sensor und/oder einer anderen zu überwachenden Einrichtung einen Datenzustand ab oder empfängt eine von dem betreffenden Aggregat oder dem Sensor oder der Einrichtung gesendete Information. Mit dieser Information wird an die Steuereinrichtung 33 der Druckeinheit 03 vorzugsweise auch eine Betriebsmittelkennung übermittelt, anhand welcher die Steuereinrichtung 33 der Druckeinheit 03 den Erzeuger und/oder Absender der an den Dateneingängen 34 abgegriffenen Information identifizieren kann. Das in der Steuereinrichtung 33 der Druckeinheit 03 ablaufende Prüfprogramm versieht die eingegangene Information zunächst mit einem aus dem Zeitsignal des ersten Kommunikationsnetzwerkes 12 generierten oder zumindest auf das von dem ersten Kommunikationsnetzwerk 12 abgegriffenen Zeitsignal bezogenen Zeitstempel, um den Zeitpunkt der Erfassung dieser Information zu dokumentieren. Der Zeitstempel ist demnach in seinem Zeitbezug auf das Zeitsignal des ersten Kommunikationsnetzwerkes 12 bezogen. Danach versieht das Prüfprogramm die an der Steuereinrichtung 33 der Druckeinheit 03 z. B. mit einer Betriebsmittelkennung eingegangene und hinsichtlich ihres Eingangszeitpunktes bereits dokumentierte Information vorzugsweise mit einer Codierung, um dieser Information mithilfe einer in der Speichereinrichtung 32 gespeicherten Zuordnung, z. B. einer Look-up-Tabelle, insbesondere eine Klartextaussage oder ein Piktogramm zuordenbar zu machen, wobei diese mit dem betreffenden Ereignis in Verbindung stehende Klartextaussage oder das entsprechende Piktogramm z. B. von der Steuereinrichtung 33 der Druckeinheit 03 ausgehend an der Kommunikationseinrichtung 26 der Druckeinheit 03 und/oder an einem Monitor des Leitstandes 19 anzeigbar ist und auch angezeigt wird. Das in der Steuereinrichtung 33 der Druckeinheit 03 ablaufende Prüfprogramm kann eingehende Informationen auch einer Plausibilitätsprüfung unterziehen, wobei unplausible Informationen von einer Weiterverarbeitung ausgenommen werden können. Eingegangene Informationen können von dem Prüfprogramm der Steuereinrichtung 33 der Druckeinheit 03 ferner auch in ihrer Wertigkeit beurteilt werden, wobei ein höherwertiges Ereignis die Weiterverarbeitung eines geringwertigen Ereignisses hemmt oder unterbindet.

Von der Steuereinrichtung 33 der Druckeinheit 03 erfasste und zumindest mit dem Zeitstempel versehene Ereignisse werden in der zu der Druckeinheit 03 gehörenden Speichereinrichtung 32 zumindest zwischengespeichert. Zumindest eines dieser als eine Störung zu wertenden oder gewerteten Ereignisse überträgt die Steuereinrichtung 33 der Druckeinheit 03 mitsamt dem diesem Ereignis aufgeprägten Zeitstempel über das zweite Kommunikationsnetzwerk 16 an den Leitrechner 18, wobei zumindest der Leitrechner 18 in dem zweiten Kommunikationsnetzwerk 16 eine von der Steuereinrichtung 33 der Druckeinheit 03 wählbare IP-Adresse aufweist. Der Leitrechner 18 speichert als eine Störung zu wertende oder bereits gewertete Ereignisse z. B. in seinem Prozessservicerechner 23. Im Leitrechner 18 kann eine mit dem Ereignis zusammen übertragene Codierung gleichfalls anhand einer dort gespeicherten Zuordnung, z. B. einer Look-up-Tabelle, insbesondere in eine Klartextaussage oder in ein Piktogramm übersetzt werden, wonach die zu dem betreffenden Ereignis gehörende Klartextaussage oder das zugehörige Piktogramm vom Leitrechner 18 oder vom Leitstand 19 ausgehend insbesondere an einem Monitor des Leitstandes 19 und/oder an der Kommunikationseinrichtung 26 der Druckeinheit 03 angezeigt wird. Zum Beispiel in gleicher Weise kann auch eine von der Steuereinrichtung 33 der Druckeinheit 03 mit dem Ereignis an den Leitrechner 18 übertragene Betriebsmittelkennung im Leitrechner 18 dekodiert und ausgewertet werden, um z. B. eine Angabe zum Hersteller oder Zulieferer des Aggregats und/oder des Sensors und/oder der anderen zu überwachenden Einrichtung anzuzeigen und damit eindeutig kenntlich zu machen, welches Aggregat und/oder welcher Sensor und/oder welche andere zu überwachende Einrichtung, die jeweils in der Druckeinheit 03 angeordnet sind, die Information bezüglich des eingetretenen Ereignisses erzeugt und/oder abgesendet hat.

In der zuvor beschriebenen Produktionsmaschine ist demnach ein Verfahren zur Erfassung von in dieser elektronisch gesteuerten Produktionsmaschine auftretenden Ereignissen ausführbar, bei dem das jeweilige Ereignis durch eine Registrierung von es anzeigenden Daten erfasst wird, wobei die Daten jedes zu erfassenden Ereignisses jeweils zusammen mit einer Angabe zum Zeitpunkt des Eintritts des betreffenden Ereignisses registriert werden, wobei die Angabe zum Zeitpunkt des Eintritts des jeweiligen Ereignisses jeweils auf ein Zeitsignal bezogen wird, wobei das zur Angabe des Zeitpunktes des Eintritts des jeweiligen Ereignisses in Bezug genommene Zeitsignal in einem ersten in der Produktionsmaschine angeordneten Kommunikationsnetzwerk 12 geführt wird, wobei zumindest ein Zeitverhalten von mindestens einem zu der Produktionsmaschine gehörenden Antrieb 09 in Abhängigkeit von dem in dem ersten Kommunikationsnetzwerk 12 geführten Zeitsignal gesteuert wird.

### Bezugszeichenliste

- 01: Einzugswerk
- 02: Rollenwechsler
- 03: Druckeinheit
- 04: Kühlwalzenständer
- 05: -
- 06: Anordnung mit mehreren Walzen
- 07: Falztrichtereinheit
- 08: Falzapparat
- 09: Antrieb
- 10: -
- 11: Steuereinrichtung
- 12: erstes Kommunikationsnetzwerk
- 13: übergeordnete Steuereinrichtung
- 14: Maschinenebene
- 15: -
- 16: zweites Kommuhikationsnetzwerk
- 17: Leitebene
- 18: Leitrechner
- 19: Leitstand
- 20: -
- 21: Prozessleitrechner
- 22: Prozessmelderechner
- 23: Prozessservicerechner
- 24: Trockner
- 25: -
- 26: Kommunikationseinrichtung
- 27: Farbversorgungseinrichtung
- 28: Gummituchwascheinrichtung
- 29: Farbdichteregeleinrichtung
- 30: -
- 31: Inspektionssystem
- 32: Speichereinrichtung
- 33: Steuereinrichtung
- 34: Dateneingang

## Patentansprüche

1. Verfahren zur Erfassung von in einer elektronisch gesteuerten Produktionsmaschine auftretenden Ereignissen, wobei die Ereignisse jeweils in einer Maschineneinheit der mehrere Maschineneinheiten aufweisenden Produktionsmaschine auftreten, wobei das jeweilige Ereignis durch eine Registrierung von es anzeigenden Daten erfasst wird, wobei die Daten jedes zu erfassenden Ereignisses jeweils zusammen mit einer Angabe zum Zeitpunkt des Eintritts des betreffenden Ereignisses registriert werden, wobei die Angabe zum Zeitpunkt des Eintritts des jeweiligen Ereignisses jeweils auf ein Zeitsignal bezogen wird, wobei das zur Angabe des Zeitpunktes des Eintritts des jeweiligen Ereignisses in Bezug genommene Zeitsignal in einem ersten in der Produktionsmaschine angeordneten Kommunikationsnetzwerk (12) geführt wird, wobei zumindest ein Zeitverhalten von mindestens einem zu der Produktionsmaschine gehörenden Antrieb (09) in Abhängigkeit von dem in dem ersten Kommunikationsnetzwerk (12) geführten Zeitsignal gesteuert wird, wobei die das in einer Maschineneinheit aufgetretene Ereignis anzeigenden Daten zusammen mit den jeweils zugehörigen Angaben zu dem jeweiligen Zeitpunkt des Eintritts dieses Ereignisses jeweils in einer zu dieser Maschineneinheit gehörenden Speichereinrichtung (32) registriert werden, wobei in mindestens einer der Maschineneinheiten der Produktionsmaschine ein Prüfprogramm abläuft, wobei dieses Prüfprogramm einen in der betreffenden Maschineneinheit durchgeführten Prozessschritt und/oder Verarbeitungsschritt überwacht, **dadurch gekennzeichnet, dass** in Verbindung mit einem Ablauf des jeweiligen Prüfprogramms von diesem ein in Verbindung mit der Durchführung des Prozessschrittes und/oder Verarbeitungsschrittes in der betreffenden Maschineneinheit auftretendes Ereignis, welches von einem erwarteten Normalfall in unzulässiger Weise abweicht, registriert wird, wobei die Daten des jeweiligen erfassten Ereignisses vom Prüfprogramm mit einer Codierung versehen werden, wobei das Prüfprogramm dieses Ereignis anhand seiner Codierung als einen Fehler, als eine Warnung oder als eine Meldung klassifiziert, wobei eingegangene Daten von dem Prüfprogramm in ihrer Wertigkeit beurteilt werden, derart dass ein höherwertiges Ereignis eine Weiterverarbeitung eines geringwertigen Ereignisses hemmt oder unterbindet.

2. Verfahren nach Anspruch 1, **dadurch gekennzeichnet, dass** das von mindestens einem zu der Produktionsmaschine gehörenden Antrieb (09) in Abhängigkeit von dem auf dem ersten Kommunikationsnetzwerk (12) geführten Zeitsignal zu steuernde Zeitverhalten einen Verlauf einer von dem betreffenden Antrieb (09) ausgeübten Bewegung beschreibt.

3. Verfahren nach Anspruch 1, **dadurch gekennzeichnet, dass** die zu registrierenden, in der Speichereinrichtung (32) zwischengespeicherten, jeweils das Ereignis anzeigenden Daten zusammen mit den jeweils zugehörigen Angaben zu dem jeweiligen Zeitpunkt des Eintritts des jeweiligen Ereignisses über ein von dem ersten Kommunikationsnetzwerk (12) verschiedenes zweites Kommunikatiönsnetzwerk (16) an einen der Produktionsmaschine zugeordneten Leitrechner (18) übertragen werden.

4. Verfahren nach Anspruch 1, **dadurch gekennzeichnet, dass** das Prüfprogramm mindestens ein in der betreffenden Maschineneinheit zumindest in Verbindung mit der Durchführung des Prozessschrittes und/oder Verarbeitungsschrittes auftretendes Ereignis, welches von einem erwarteten Normalfall in unzulässiger Weise abweicht, als eine Störung wertet.

5. Verfahren nach Anspruch 4, **dadurch gekennzeichnet, dass** das Prüfprogramm die Daten zumindest des als eine Störung gewerteten Ereignisses mit einem die Angabe zu dem Zeitpunkt des Eintritts des betreffenden Ereignisses bildenden, in seinem Zeitbezug auf das in dem ersten Kommunikationsnetzwerk (12) geführte Zeitsignal bezogenen Zeitstempel versieht.

6. Verfahren nach Anspruch 4, **dadurch gekennzeichnet, dass** mehrere Maschineneinheiten der Produktionsmaschine jeweils mindestens einen Antrieb (09) und jeweils mindestens eine zumindest das Zeitverhalten von dem jeweiligen mindestens einen Antrieb (09) steuernde oder regelnde Steuereinrichtung (11) aufweisen, wobei das erste Kommunikationsnetzwerk (12) die jeweils mindestens eine Steuereinrichtung (11) dieser Maschineneinheiten jeweils mit einer diesen Maschineneinheiten übergeordneten Steuereinrichtung (13) verbindet.

7. Verfahren nach Anspruch 6, **dadurch gekennzeichnet, dass** die übergeordnete Steuereinrichtung (13) zusätzlich zu ihrer Anbindung an das erste Kommunikationsnetzwerk (12) mittels eines zweiten Kommunikationsnetzwerkes (16) mit einem dieser Produktionsmaschine zugeordneten Leitrechner (18) in einer datentechnischen Verbindung steht.

8. Verfahren nach Anspruch 5, **dadurch gekennzeichnet, dass** das dem jeweiligen Ereignis den Zeitstempel aufprägende Prüfprogramm in einer der mindestens einen Maschineneinheit zugeordneten übergeordneten Steuereinrichtung (13) oder in einer der mindestens einen Maschineneinheit zugeordneten, von ihrer übergeordneten Steuereinrichtung (13) getrennten, gleichfalls mit dem zweiten Kommunikationsnetzwerk (16) verbundenen weiteren Steuereinrichtung (33) abläuft.

9. Verfahren nach Anspruch 1, **dadurch gekennzeichnet, dass** mehrere in derselben Maschineneinheit angeordnete Antriebe (09) jeweils zumindest in ihrem jeweiligen Zeitverhalten von einer dem jeweiligen Antrieb (09) zugeordneten Steuereinrichtung (11) gesteuert oder geregelt werden, wobei das erste Kommunikationsnetzwerk (12) jede dieser Steuereinrichtungen (11) mit derselben dieser Maschineneinheit zugeordneten übergeordneten Steuereinrichtung (13) verbindet.

10. Verfahren nach Anspruch 1, **dadurch gekennzeichnet, dass** das erste Kommunikationsnetzwerk (12) mehrere zu der Produktionsmaschine gehörende übergeordnete Steuereinrichtungen (13) miteinander verbindet.

11. Verfahren nach Anspruch 1, **dadurch gekennzeichnet, dass** zumindest das Zeitverhalten des mindestens einen Antriebs (09) der jeweiligen Maschineneinheit jeweils von einer dem jeweiligen Antrieb (09) zugeordneten Steuereinrichtung (11) gesteuert oder geregelt wird, wobei das erste Kommunikationsnetzwerk (12) in der mehrere derartige Maschineneinheiten aufweisenden Produktionsmaschine jede dieser Steuereinrichtungen (11) mit einer von mehreren zu der Produktionsmaschine gehörenden übergeordneten Steuereinrichtungen (13) verbindet.

12. Verfahren nach Anspruch 3 oder 7, **dadurch gekennzeichnet, dass** das zweite Kommunikationsnetzwerk (16) eine in einer der Maschineneinheiten angeordnete, der Kommunikation zwischen Mensch und Maschine dienende Kommunikationseinrichtung (26) mit dem Leitrechner (18) verbindet und dass dem erfassten Ereignis anhand seiner Codierung eine Klartextaussage öder ein Piktogramm zugeordnet wird, wobei die Klartextaussage oder das Piktogramm an der Kommunikationseinrichtung (26) der betreffenden Maschineneinheit und/oder an einem Monitor eines zu der Produktionsmaschine gehörenden, über das zweite Kommunikationsnetzwerk (16) mit dem Leitrechner (18) verbundenen Leitstandes (19) angezeigt wird.

13. Verfahren nach Anspruch 1, **dadurch gekennzeichnet, dass** als Zeitsignal ein Signal verwendet wird, welches durch das erste Kommunikationsnetzwerk (12) entweder unmittelbar oder aus diesem Signal ableitbar zur Verfügung gestellt wird.

14. Verfahren nach Anspruch 1, **dadurch gekennzeichnet, dass** als Zeitsignal ein absolutes Zeitsignal oder ein relatives Zeitsignal verwendet wird.

15. Verfahren nach Anspruch 1, **dadurch gekennzeichnet, dass** das erste Kommunikationsnetzwerk (12) Signale einer virtuellen Leitachse kommuniziert, wobei mehrere Antriebe (09) mit dieser virtuellen Leitachse in Verbindung stehen.

## Claims

1. A method for sensing events occurring in an electronically controlled production machine, the events each occurring in a machine unit of the production machine having numerous machine units, the respective event being sensed by recording data indicating it, wherein the data of each event to be sensed are respectively recorded together with specification of the time of occurrence of the relevant event, wherein the specification of the time of occurrence of the respective event is with reference to a time signal, wherein the time signal with regard to specifying the time of occurrence of the respective event is introduced into a first communications network (12) positioned in the production machine, wherein at least one runtime performance of at least one drive (09) belonging to the production machine is controlled depending on the time signal introduced into the first communications network (12), wherein the data indicating the event having occurred in the machine unit together with the respective specifications associated with the respective time of the occurrence of this event are respectively recorded in a memory device (32) belonging to this machine unit, wherein a checking program is running in at least one of the machine units of the production machine, wherein this checking program monitors a process step and/or a processing step executed in the relevant machine unit, **characterized in that** in connection with a sequence of the respective checking program of the latter, an event occurring in the relevant machine unit, in connection with the execution of the process step and/or a processing step, which event deviates in an inadmissible way from a normal expected case, is recorded, wherein the data of the respective sensed event is provided with coding, wherein the checking program classifies this event according to its coding as an error, as a warning or as a notification, wherein the incoming data are assessed by the checking program in their significance, so that an event of higher significance inhibits or prevents further processing of an insignificant event.

2. The method according to claim 1, **characterized in that** the drive (09) belonging to the machine unit, depending on the time signal introduced on the first communications network (12) for controlling runtime performance, describes a curve of a movement performed by the relevant drive (09).

3. The method according to claim 1, **characterized in that** the respectively event-indicating data to be recorded, temporarily stored in the memory device (32) together with the respectively associated specifications relating to the respective time of the occurrence of the respective event, are transmitted over a second communications network (16) different from the first communications network (12) to a master computer (18) associated with the production machine.

4. The method according to claim 1, **characterized in that** the checking program assesses as a perturbation at least one event occurring in the relevant machine unit at least in connection with the execution of the process step and/or processing step, which event deviates in an inadmissible way from a normal expected case.

5. The method according to claim 4, **characterized in that** the checking program provides the data of at least the event assessed as a perturbation with a time-stamp referring in its time reference to the time signal introduced into the first communications network (12), forming the specification of the time of the occurrence of the relevant event.

6. The method according to claim 4, **characterized in that** several machine units of the production machine respectively have at least one drive (09) and respectively have at least the runtime performance of the respective control device (11) controlling or regulating at least one drive (09), wherein the first communications network (12) connects the respective at least one control device (11) of these machine units respectively to a control device (13) on a higher level than these machine units.

7. The method according to claim 6, **characterized in that** the higher-level control device (13) in addition to its connection to the first communications network (12) by means of a second communications network (16), is further in data technological communication with a master computer (18) associated with this production machine.

8. The method according to claim 5, **characterized in that** the checking program imprinting the time-stamp to the respective event runs in one higher-level control device (13) associated with at least one machine unit or in a further control device (33), associated with at least one machine unit, separated from its higher-level control device (13), equally connected to the second communications network (16).

9. The method according to claim 1, **characterized in that** several drives (09) positioned in the same machine unit are respectively controlled and regulated, at least in their respective runtime performance, by a control device (11) associated with the respective drive (09), wherein the first communications network (12) connects each of these control devices (11) with the same higher-level control device (13) associated with this drive.

10. The method according to claim 1, **characterized in that** the first communications network (12) connects together several higher-level control devices (13) belonging to the production machine.

11. The method according to claim 1, **characterized in that** at least the runtime performance of said at least one drive (09) of the respective machine unit is respectively controlled or regulated by a control device (11) associated with the respective drive (09), wherein the first communications network (12) in the production machine having several such machine units connects each of the control devices (11) with one of several higher-level control devices (13) belonging to the production machine.

12. The method according to claim 3 or 7, **characterized in that** the second communications network (16) connects a communications device (26), positioned in one of the machine units, used for man-machine communications, to the master computer (18) and that a clear text message or a pictogram is associated with the sensed event by means of its coding, the clear text message or pictogram being displayed on the communications device (26) of the relevant machine unit and/or on a monitor of a control station (19), belonging to the production machine, connected to the master computer (18) via the second communications network (16).

13. The method according to claim 1, **characterized in that** as a time signal, a signal is used, which is made available by the first communications network (12) either directly or which may be derived from this signal.

14. The method according to claim 1, **characterized in that** an absolute time signal or a relative time signal are used as a time signal.

15. The method according to claim 1, **characterized in that** the first communications network (12) communicates signals to a virtual master axis, several drives (09) being in contact with this virtual master axis.

## Revendications

1. Procédé de saisie d'événements survenant dans une machine de production à commande électronique, où les événements surviennent chacun dans une unité de machine de la machine de production dotée d'une pluralité d'unités de machine, où chaque événement est saisi par enregistrement de données qui le signalent, où les données de chaque événement à saisir sont enregistrées avec une spécification du moment de la survenue de l'événement correspondant, où la spécification du moment des survenue de chaque événement est rapportée à un signal d'horloge, où le signal d'horloge pris en référence pour la spécification du moment de survenue de l'événement correspondant est appliqué dans un premier réseau de communication (12) disposé dans la machine de production, où au moins un comportement temporel d'au moins un entraînement (09) appartenant à la machine de production est commandé en fonction du signal d'horloge appliqué dans le premier réseau de communication (12), où les données signalant un événement survenu dans une unité de machine sont enregistrées avec les spécifications correspondantes relatives au moment de survenue dudit événement dans un dispositif de mémorisation (32) appartenant à ladite unité de machine, où un programme de contrôle est exécuté dans au moins une des unités de machine de la machine de production, ledit programme de contrôle surveillant une phase de processus et/ou phase de traitement exécutée dans l'unité de machine concernée, **caractérisé en ce qu'**en liaison avec un déroulement du programme de contrôle, un événement survenant en relation avec l'exécution de la phase de processus et/ou de la phase de traitement dans l'unité de machine concernée, différant de manière inadmissible d'un cas normal attendu, est enregistré par ledit programme de contrôle, les données de chaque événement saisi étant pourvues d'un codage par le programme de contrôle, le programme de contrôle classant ledit événement comme erreur, alarme ou message en fonction de son codage, les données reçues étant évaluées quant à leur valeur par le programme de contrôle, de telle manière qu'un événement de valeur supérieure bloque ou empêche un traitement d'un événement de valeur inférieure.

2. Procédé selon la revendication 1, **caractérisé en ce que** le comportement temporel à commander par au moins un entraînement (09) appartenant à la machine de production en fonction du signal d'horloge appliqué au premier réseau de communication (12) décrit un tracé d'un déplacement effectué par l'entraînement (09) concerné.

3. Procédé selon la revendication 1, **caractérisé en ce que** les données de signalement de l'événement à enregistrer, temporairement sauvegardées dans le dispositif de mémorisation (32), sont transmises à un ordinateur-maître (18) affecté à la machine de production avec les spécifications correspondantes relatives au moment de survenue de l'événement, via un deuxième réseau de communication (16) différent du premier réseau de communication (12).

4. Procédé selon la revendication 1, **caractérisé en ce que** le programme de contrôle évalue comme dysfonctionnement au moins un événement survenant dans l'unité de machine concernée au moins en relation avec l'exécution de la phase de processus et/ou de la phase de traitement, lequel diffère de manière inadmissible d'un cas normal attendu.

5. Procédé selon la revendication 4, **caractérisé en ce que** le programme de contrôle pourvoit les données d'au moins l'événement évalué comme dysfonctionnement d'une estampille temporelle formant la spécification relative au moment de survenue de l'événement concerné, se rapportant par sa référence temporelle au signal d'horloge appliqué dans le premier réseau de communication (12).

6. Procédé selon la revendication 4, **caractérisé en ce que** plusieurs unités de machine de la machine de production comprennent chacune au moins un entraînement (09) et au moins un dispositif de commande (11) commandant ou régulant au moins le comportement temporel du ou des entraînements (09) respectifs, le premier réseau de communication (12) reliant le ou les dispositifs de commande (11) desdites unités de machine à un dispositif de commande (13) hiérarchiquement supérieur auxdites unités de machine.

7. Procédé selon la revendication 6, **caractérisé en ce qu'**en plus de sa liaison au premier réseau de communication (12), une liaison de données relie le dispositif de commande (13) hiérarchiquement supérieur à un ordinateur-maître (18) affecté à ladite machine de production via un deuxième réseau de communication (16).

8. Procédé selon la revendication 5, **caractérisé en ce que** le programme de contrôle attribuant l'estampille temporelle à l'événement respectif est exécuté dans un dispositif de commande (13) hiérarchiquement supérieur affecté à l'unité ou aux unités de machine, ou dans un dispositif de commande (33) affecté à l'unité ou aux unités de machine, séparé du dispositif de commande (13) hiérarchiquement supérieur de celle(s)-ci, et également relié au deuxième réseau de communication (16).

9. Procédé selon la revendication 1, **caractérisé en ce que** plusieurs entraînements (09) disposés dans la même unité de machine sont commandés ou régulés au moins quant à leur comportement temporel respectif par un dispositif de commande (11) affecté à chaque entraînement (09), le premier réseau de communication (12) reliant chacun desdits dispositifs de commande (11) au même dispositif de commande (13) hiérarchiquement supérieur affecté à ladite unité de machine.

10. Procédé selon la revendication 1, **caractérisé en ce que** le premier réseau de communication (12) relie entre eux plusieurs dispositifs de commande (13) hiérarchiquement supérieurs appartenant à la machine de production.

11. Procédé selon la revendication 1, **caractérisé en ce qu'**au moins le comportement temporel du ou des entraînements (09) de l'unité de machine respective est commandé ou régulé par un dispositif de commande (11) affecté à l'entraînement (09) correspondant, le premier réseau de communication (12) reliant, dans la machine de production comprenant plusieurs unités de machine de ce type, chacun desdits dispositifs de commande (11) à un parmi plusieurs dispositifs de commande (13) hiérarchiquement supérieurs appartenant à la machine de production.

12. Procédé selon la revendication 3 ou 7, **caractérisé en ce que** le deuxième réseau de communication (16) relie à l'ordinateur-maître (18) un dispositif de communication (26) disposé dans une des unités de machine et servant à la communication homme/machine, et **en ce qu'**un énoncé en texte clair ou un pictogramme sont affectés à l'événement saisi en fonction de son codage, l'énoncé en texte clair ou le pictogramme étant affichés sur le dispositif de communication (26) de l'unité de machine concernée et/ou sur un moniteur d'un poste de commande (19) appartenant à la machine de production et relié à l'ordinateur-maître (18) par le deuxième réseau de communication (16).

13. Procédé selon la revendication 1, **caractérisé en ce qu'**un signal est utilisé comme signal d'horloge, lequel est délivré par le premier réseau de communication (12) soit directement, soit de manière déductible dudit signal.

14. Procédé selon la revendication 1, **caractérisé en ce qu'**un signal d'horloge absolu ou un signal d'horloge relatif sont utilisés comme signal d'horloge.

15. Procédé selon la revendication 1, **caractérisé en ce que** le premier réseau de communication (12) communique des signaux à un axe-maître virtuel, plusieurs entraînements (09) étant reliés audit axe-maître virtuel.
